**Europäisches Patentamt**

(19) **European Patent Office**

**Office européen des brevets**

(11) Veröffentlichungsnummer: **0 044 554**
**B1**

(12) **EUROPÄISCHE PATENTSCHRIFT**

(45) Veröffentlichungstag der Patentschrift:
**30.05.84**

(21) Anmeldenummer: **81105703.3**

(22) Anmeldetag: **20.07.81**

(51) Int. Cl.³: **H 04 L 1/10**, H 04 L 1/24,
H 04 L 25/52

(54) Überwachungseinrichtung für einen PCM-Regenerator mit Coderegel-Verletzungsprüfer.

(30) Priorität: **22.07.80 DE 3027735**

(43) Veröffentlichungstag der Anmeldung:
**27.01.82 Patentblatt 82/4**

(45) Bekanntmachung des Hinweises auf die Patenterteilung:
**30.05.84 Patentblatt 84/22**

(84) Benannte Vertragsstaaten:
**AT BE CH DE FR GB IT LI NL SE**

(56) Entgegenhaltungen:
**EP - A - 0 044 555**
**US - A - 3 731 011**
**US - A - 3 770 913**
**US - A - 3 987 395**
**US - A - 4 086 566**

**THE BELL SYSTEM TECHNICAL JOURNAL, Band 41, Nr. 1, Januar 1962, Seiten 25-97 New York, U.S.A. J.S MAYO: "A bipolar repeater for pulse code modulation signals"**

(73) Patentinhaber: **SIEMENS AKTIENGESELLSCHAFT,
Berlin und München Wittelsbacherplatz 2,
D-8000 München 2 (DE)**

(72) Erfinder: **Jungmeister, Hans Günther, Dr.,
Kornwegerstrasse 4, D-8000 München 70 (DE)**

ACTORUM AG

## Beschreibung

Die Erfindung betrifft eine Anordnung zur Überwachung eines einen Coderegel-Verletzungsprüfer mit angeschlossenem Fehlerzähler enthaltenden Regenerators für im AMI-Code vorliegende PCM-Signale, der an wenigstens zwei inneren Anschlüssen zwei amplituden- und zeitmässig regenerierte unipolare Impulszüge erzeugt, von denen jeweils einer die positiven und einer die negativen Eingangsimpulse repräsentiert, wobei zur Coderegel-Verletzungsprüfung zusätzlich ein RS-Flipflop vorgesehen ist, dessen Rücksetzeingang und dessen Setzeingang jeweils getrennt mit jeweils einem Ausgang der getakteten D-Flipflops verbunden sind und die Ausgänge des RS-Flipflops den Gegentaktsignalausgang für das regenerierte Signal darstellen, so dass an jedem Ausgangsanschluss ein unipolarer, die gesamte Information enthaltender Impulszug entnehmbar ist, wobei zwei Gatteranordnungen mit jeweils zwei Eingängen vorgesehen sind und der eine Eingang der ersten Gatteranordnung mit dem nichtinvertierenden Ausgang des RS-Flipflops verbunden ist und der andere Eingang der ersten Gatteranordnung mit einem Ausgang desjenigen getakteten D-Flipflops verbunden ist, an das der Rücksetzeingang des RS-Flipflops angeschlossen ist, wobei weiters der eine Eingang der zweiten Gatteranordnung mit dem invertierenden Ausgang des RS-Flipflops verbunden ist und der andere Eingang der zweiten Gatteranordnung mit einem Ausgang desjenigen getakteten D-Flipflops verbunden ist, an das der Setzeingang des RS-Flipflops angeschlossen ist und wobei die Ausgänge der Gatteranordnungen miteinander und mit einem Ausgang für ein Fehlersignal verbunden sind.

Ein solcher Regenerator mit Coderegel-Verletzungsprüfer ist in der parallelen europäischen Patentanmeldung 81 105 704.1 (EP-A-0 044 555) angemeldet am 20. 07. 81, näher beschrieben.

Durch Zusammenfassung einer Vielzahl von digitalisierten Sprachsignalen oder Datensignalen zu einem Zeitmultiplexsignal und durch Zusammenfassung mehrerer Zeitmultiplexsignale gelangt man schliesslich zu digitalen Zeitmultiplexsignalen mit Bitraten, die bei einigen hundert Mbit/s liegen können. Derartige Zeitmultiplexsignale werden über Kupferkabel wegen der Gleichstromfreiheit des Übertragungssignals häufig als pseudoternäre digitale Signale übertragen, wobei das Übertragungssignal häufig mittels des AMI-Codes umgeformt wird. Innerhalb der Übertragungsstrecke sind in bestimmten Abständen in die Kabelstrecke Impulsregeneratoren eingefügt, die die amplituden- und zeitmässigen Regenerierung des Übertragungssignals vornehmen. Der AMI-Code ist dadurch gekennzeichnet, dass es sich um einen pseudoternären Code handelt, in dem binäre Nullen als Nullschritte und binäre Einsen abwechselnd als Plus- und Minussignale mit logischem Eins-Pegel übertragen werden, wobei die Polarität aufeinanderfolgender Eins-Impulse jeweils wechselt. Bei der Regenerierung wird aus den positiven Eins-Signalen ein erster und aus den negativen Eins-Signalen ein zweiter unipolarer Impulszug erzeugt und beide Impulszüge getrennt amplituden- und zeitmässig regeneriert. Zur Regenerierung werden häufig getaktete D-Flipflops verwendet, wobei bei bestimmten Anforderungen an die Amplitudenregeneration den D-Flipflops Amplitudenfilter vorgeschaltet werden. Abschliessend erfolgt eine Code-Wandlung der regenerierten unipolaren Impulszüge zu einem neuen, im AMI-Code vorliegenden Übertragungssignal. Im Hinblick auf die einfache Erzeugung eines derartigen Signals mittels einer am Ende kurzgeschlossenen Viertelwellenstichleitung ist im Regenerator die Umformung der unipolaren Impulszüge in ein im Binär-Differenzcode vorliegendes Signal erwünscht. Die Coderegel für diesen Code besteht darin, dass eine logische Eins im binären Ausgangssignal als Wechsel des logischen Pegels von Null auf Eins oder von Eins auf Null im Binär-Differenzcode markiert wird, während die logische Null im binären Ausgangssignal als Beibehaltung des logischen Pegels Eins oder Null vom vorausgegangenen Bit im Binär-Differenzcode markiert wird. Zur Betriebsüberwachung derartiger digitaler Übertragungssysteme mit im AMI-Code vorliegendem Übertragungssignal wird von der Redundanz dieses Codes Gebrauch gemacht, der zwar über drei digitale Werte verfügt, von denen aber zur Informationsübertragung zwei für denselben Zustand des ursprünglichen Signals verwendet werden. Mittels eines Coderegel-Verletzungsprüfers ist es unter Ausnutzung der speziellen Eigenschaft des AMI-Codes, dass aufeinanderfolgende Eins-Impulse immer mit unterschiedlicher Polarität auftreten müssen, möglich, das Übertragungssignal auch dann zu überwachen, wenn es durch eine Pseudozufallsfolge verwürfelt ist.

Im Falle, dass von diesem Coderegel-Verletzungsprüfer über eine nachgeschaltete Telemetrieeinrichtung kein Fehler an eine auswertende Zentrale abgegeben wird, besteht neben der Möglichkeit der absolut fehlerfreien Übertragung des digitalen Signals auch die Möglichkeit einer Störung im Coderegel-Verletzungsprüfer. Erschwert wird die Prüfung weiterhin durch folgenden Umstand: Um den Betrieb nicht zu stören, könnten zu Prüfzwecken in der Sendestelle gezielt nur solche Fehler eingesetzt werden, die die zu übertragende Nachricht nicht verändern. Solche Fehler können aber nur Coderegel-Verletzungen sein. Bei Systemen der beschriebenen Art werden jedoch alle Coderegel-Verletzungen von jedem Zwischenregenerator vollständig entfernt. Es ist also unmöglich, derartige Systeme mittels von der Endstelle ausgesandter spezieller Fehlersignale zu prüfen.

Aus der US-A-3 987 395 ist eine Regeneratorenanordnung für bipolare digitale Signale bekannt, die einen Fehler-Detektor enthält. Dieser Fehler-Detektor enthält eingangsseitig zwei Flipflops, von denen das eine die positiven und das andere die negativen Impulszüge des bereits regenerierten Eingangssignals erhält, die sie jeweils mit der Verzögerung einer Taktperiode an ein zusätzliches Flipflop weiterleiten. Mit den beiden Ausgängen des Flipflop ist jeweils getrennt ein Eingang eines Komparators verbunden, dessen anderer Eingang mit einem der Signaleingänge verbunden ist. Die Ausgänge der Komparatoren sind über ein ODER-Gatter zusammengeführt, an dessen Ausgang ein Fehlerzähler angeschlossen ist.

Die Aufgabe der Erfindung besteht nun darin, eine Möglichkeit zu finden, den Coderegel-Verletzungsprüfer während des laufenden Betriebs zu überwachen und auch bei ausser Betrieb gesetztem Übertragungssystem prüfen zu können.

Erfindungsgemäss wird die Aufgabe dadurch gelöst, dass eine Erzeugung von Prüffolgen im laufenden Betrieb dadurch erfolgt, dass an jeweils einem der Ausgänge der D-Flipflops Spannungsdetektoren angeschlossen sind, deren Ausgangsanschlüsse mit den Eingängen einer Auswerteschaltung verbunden sind und dass dabei die Steuerausgänge dieser Auswerteschaltung mit dem Basisanschluss jeweils eines von zwei Schalttransistoren verbunden sind, deren Emitteranschlüsse jeweils mit Bezugspotential, deren Kollektoranschlüsse über je einen Schutzwiderstand mit einem der Ausgänge des zugeordneten D-Flipflops, einem der Eingänge der zugeordneten Gatteranordnung und über einen weiteren Widerstand mit Betriebsspannung verbunden sind und dabei entsprechend der Polarität des angeschlossenen Ausgangs des D-Flipflops in beiden Fällen ein npn-Transistor vorgesehen ist.

In den Patentansprüchen 2 bis 6 sind weitere Ausbildungen der erfindungsgemässen Anordnung dargestellt.

Die Erfindung soll im folgenden anhand der Zeichnung näher erläutert werden. In der Zeichnung zeigt

Fig. 1 einen Teil eines PCM-Regenerators mit einem Coderegel-Verletzungsprüfer und einem ersten regeneratorseitigen Teil der Überwachungseinrichtung für den Coderegel-Verletzungsprüfer mit einer Detektorschaltung,

Fig. 2 einen Teil eines Regenerators entsprechend Fig. 1 mit verringertem Aufwand in der Detektorschaltung und mit einem Umcodier-Flipflop und

Fig. 3 einen gegenüber dem Regenerator nach Fig. 1 vereinfachten Regenerator ohne Detektorschaltung.

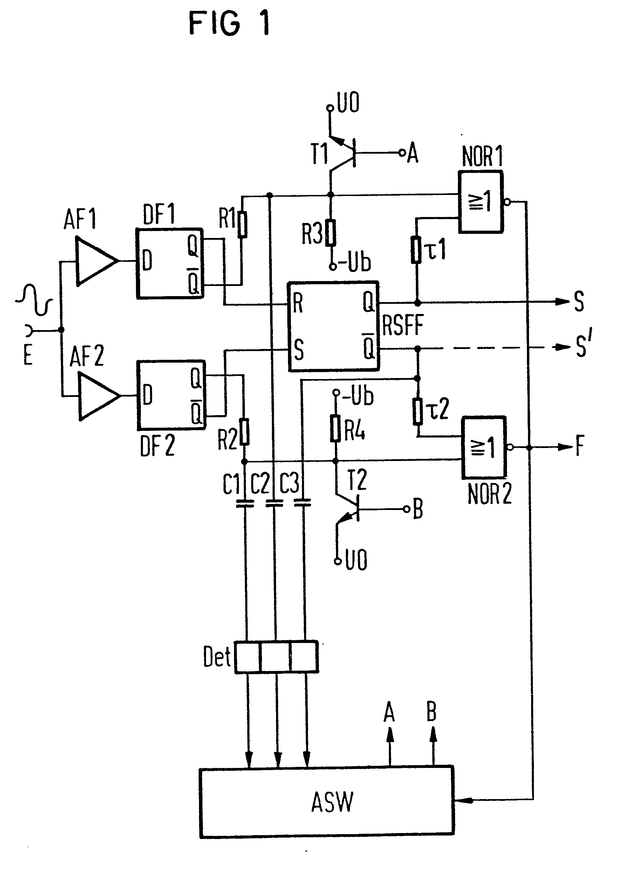

In Fig. 1 ist der für die Erfindung wesentliche Teil eines PCM-Regenerators dargestellt, der die zur Amplitudenentscheidung bzw. Vorentscheidung der empfangenen Impulse verwendeten Amplitudenfilter AF1, AF2 und die üblicherweise zur Zeitentscheidung verwendeten getakteten D-Flipflops DF1, DF2 umfasst. Nicht mit dargestellt sind also die Fernspeiseweichen und die zur Entzerrung des Kabelfrequenzganges notwendige eingangsseitige Entzerreranordnung sowie die Verbindungen zwischen der Auswerteschaltung und der Telemetrieeinrichtung selbst. Zusätzlich dargestellt ist die angeschlossene Prüf- und Überwachungseinrichtung. Am Eingang E wird ein entzerrtes pseudoternäres Signal empfangen, das in bipolarer Form und im AMI-Code vorliegt. Durch ein erstes und ein zweites Amplitudenfilter wird das bipolare Signal in zwei unipolare Impulszüge aufgeteilt, wobei vom ersten Amplitudenfilter die positiven und vom zweiten Amplitudenfilter die negativen Impulse des Eingangssignals an die D-Eingänge der nachgeschalteten D-Flipflops abgegeben werden. Zur Coderegel-Verletzungsprüfung ist mit dem nichtinvertierenden Ausgang Q des ersten D-Flipflops der Rücksetzeingang und mit dem invertierenden Ausgang $\overline{Q}$ der Setzeingang eines zusätzlichen RS-Flipflops RSFF verbunden. Die Verwendung des inversen Ausgangs $\overline{Q}$ des zweiten D-Flipflops erfolgt im zweiten Amplitudenentscheider ohne Invertierung der negativen Eingangsimpulse des Eingangssignals. Mit den nichtbeschalteten Ausgängen der beiden D-Flipflops sind über relativ niederohmige Schutzwiderstände R1 bzw. R2 jeweils die ersten Eingänge eines ersten und eines zweiten NOR-Gatters NOR1, NOR2 verbunden, deren zweite Eingänge über ein erstes bzw. zweites Laufzeitglied $\tau 1$, $\tau 2$ mit dem nichtinvertierenden Ausgang Q bzw. dem invertierenden Ausgang $\overline{Q}$ des RS-Flipflops verbunden sind. Die Signalverzögerung der Laufzeitglieder ist dabei so eingestellt, dass die Summe aus Signalverzögerung im RS-Flipflop und in jeweils einem angeschlossenen Laufzeitglied zusammen eine Bitdauer beträgt. Ausserdem sind mit den Ausgängen des RS-Flipflops die Ausgangsanschlüsse S bzw. S' eines Gegentaktausgangs für das Übertragungssignal verbunden, das an diesen Ausgangsanschlüssen im Binär-Differenzcode vorliegt. Die Ausgänge der beiden NOR-Gatter sind entsprechend einer wired-or-Verknüpfung miteinander und mit einem Ausgang F für ein Fehlersignal verbunden, an das über einen Fehlerzähler die Auswerteschaltung angeschlossen ist und ausserdem eine andere Auswertungseinrichtung angeschlossen sein kann; der Fehlerzähler wurde in der Fig. 1 in die Auswerteschaltung ASW einbezogen.

Mit jeweils einem Ausgang der D-Flipflops und des RS-Flipflops sind über die Kondensatoren C1, C2, C3 mit relativ geringem Kapazitätswert einzelne Eingänge einer Detektorschaltung Det relativ lose kapazitiv angekoppelt. Die Detektorschaltung enthält Gleichrichteranordnungen, durch die während der laufenden Übertragung des digitalen Signals je ein Gleichspannungssignal erzeugt wird, das an Eingänge einer nachgeschalteten Auswertungseinrichtung abgegeben wird.

Es hat sich gezeigt, dass die in der Detektorschaltung enthaltene Gleichrichteranordnung auch entfallen kann, so dass als Spannungsdetektor auch ein Gleichspannungsdetektor verwendet werden kann. Der Gleichspannungsdetektor enthält ein Integrationsglied hoher Zeitkonstante, dem ein Schwellwertschalter nachgeschaltet ist. Anstelle der losen kapazitiven Ankopplung ist der Gleichspannungsdetektor über Widerstände an die Ausgänge der Flipflops anzuschliessen, wobei die Werte dieser Widerstände vorzugsweise im Kilo-Ohm-Bereich liegen.

Mit jeweils einem Steuerausgang A bzw. B der Auswertungseinrichtung ASW ist der Basisanschluss eines ersten npn-Transistors T1 bzw. eines zweiten npn-Transistors T2 verbunden. Die Emitteranschlüsse dieser Transistoren sind an einen Anschluss für eine Spannung $U_o$ von etwa −2 V entsprechend dem logischen Nullpegel angeschlossen. Der Kollektoranschluss des ersten Transistors T1 ist an die Verbindung zwischen dem ersten Widerstand R1 und dem ersten Eingang des ersten NOR-Gatters angeschlossen und ausserdem über einen dritten Widerstand R3 mit der Betriebsspannung −Ub von etwa −5 V verbunden. Der Kollektoranschluss des zweiten Transistors T2 ist an die Verbindung zwischen dem zweiten Widerstand R2 und dem ersten Eingang des zweiten NOR-Gatters NOR2 angeschlossen und ausserdem über einen vierten Widerstand R4 mit Betriebsspannung −Ub verbunden. Anstelle der npn-Transistoren T1 und T2 können bei Vertauschung von Kollektor- und Emitteranschlüssen auch pnp-Transistoren verwendet werden. Die Verwendung dieser Transistoren ist zwar wegen der geringeren Auswahl und weiterer Nachteile eingeschränkt, im vorliegenden Fall ergibt sich aber bei Realisierung mittels AND-Gattern eine geringere Steuerleistung. Die Widerstände R3 und R4 sind primär die Emitterwiderstände des ersten bzw. zweiten D-Flipflops DF1, DF2, da die Ausgangsanschlüsse dieser Flipflops direkt an den Emitteranschluss als sogenannter «offener Emitter» geführt sind. Ausserdem dienen die Widerstände R3 und R4 zur Einstellung des Ruhelogikpegels der nachgeschalteten NOR-Gatter (pull down resistors) und zusätzlich wird damit der ohmsche Eingangswiderstand der NOR-Gatter bei den hohen Arbeitsfrequenzen sichergestellt. Die Widerstände R3 und R4 wirken also nicht als Kollektorwiderstände für die Transistoren T1 und T2, die Kollektorwiderstände sind die wesentlich niederohmigeren Widerstände R1 und R2.

Es sind folgende, nachstehend aufgeführte Fehlerfälle möglich. Als erstes kann der invertierende Ausgang $\overline{Q}$ des ersten D-Flipflops DF1 ständig Maximalpegel führen, so dass das erste NOR-Gatter NOR1 ständig gesperrt ist. In diesem Fall entsteht ohne zusätzliche Überwachungseinrichtung keine Meldung am Fehlerausgang. Im zweiten Fall ist der gleiche invertierende Ausgang $\overline{Q}$ des ersten D-Flipflops DF1 ständig auf dem niedrigsten Pegel oder schwingt oder ist nicht mehr mit dem Eingangssignal korreliert. In diesem Fall wird bereits ohne zusätzliche Überwachungseinrichtung eine Meldung an den Fehlerausgang abgegeben, so dass für diesen Fall keine Zusatzmassnahme erforderlich ist. Als dritter Fehlerfall ist denkbar, dass der nichtinvertierende Ausgang Q des zweiten D-Flipflops ebenfalls ständig auf dem niedrigsten Pegel liegt oder schwingt. Dieser Fall ist analog zum zweiten Fall, es wird also bereits ohne Zusatzeinrichtung eine Meldung am Fehlerausgang abgegeben. In einem vierten Fall liegt der nichtinvertierende Ausgang Q des zweiten D-Flipflops ständig auf dem Maximalpegel; in diesem zum ersten analogen Fall wird ebenfalls keine Meldung an den Fehlerausgang abgegeben. Entsprechendes gilt auch für die fünfte Möglichkeit, dass der invertierende Ausgang $\overline{Q}$ des RS-Flipflops ständig auf Maximalpegel liegt. Als sechster Fall ist denkbar, dass der invertierende Ausgang des RS-Flipflops ständig auf dem Minimalpegel liegt oder schwingt. Dieser Fall entspricht dem beschriebenen zweiten Fall, es wird also auch ohne Zusatzeinrichtung eine Meldung an den Fehlerausgang abgegeben. Dies gilt auch für einen siebten Fall, dass einer der NOR-Gatterausgänge ständig auf Maximalpegel liegt oder schwingt. Schliesslich ist ein achter Fehlerfall denkbar, dass einer der NOR-Gatterausgänge ständig auf Minimalpegel liegt, wobei ohne Zusatzeinrichtung keine Fehlermeldung erzeugt wird.

Die zusätzliche Überwachung des invertierenden Ausgangs $\overline{Q}$ des ersten D-Flipflops, des nichtinvertierenden Ausgangs Q des zweiten D-Flipflops und des invertierenden Ausgangs $\overline{Q}$ des RS-Flipflops erfolgt durch die dargestellten Detektoren Det für Wechselspannung, die über die Kondensatoren C1, C2, C3 an diese Ausgänge angekoppelt sind. Die Kondensatoren verfügen über einen vergleichsweise niedrigen Kapazitätswert, so dass es sich um eine lose kapazitive Ankopplung handelt, die die an diesen Ausgängen auftretenden Impulse nicht nennenswert verformt. Infolge des ständigen Zeichenwechsels bei normaler Signalübertragung muss an allen diesen Ausgängen eine Wechselspannung auftreten, unterschreitet diese einen Mindestwert, dann liegt ein Fehler vor. Es ist auch der Fall denkbar, dass diese Wechselspannung durch eine unerwünschte Schwingung erzeugt wird, in diesem Falle wird aber am Fehlerausgang ohnehin eine Fehlermeldung abgegeben.

Zur Prüfung der NOR-Gatter werden deren nicht an das RS-Flipflop angeschlossene Eingänge abwechselnd an einen niedrigen Pegel angelegt. In diesem Fall müssen am Fehlerausgang Impulse auftreten, wenn die NOR-Gatter funktionieren und die Wechselspannungsdetektoren korrekten Pegel melden. Zur praktischen Durchführung dieser Massnahme ist jedoch einiges zu beachten: Um die vom invertierenden Ausgang $\overline{Q}$ des ersten D-Flipflops bzw. vom nichtinvertierenden Ausgang Q des zweiten D-Flipflops ausgehenden Ströme auf einen zulässigen Wert zu begrenzen, wurden die Widerstände R1 und R2 vorgesehen, da andernfalls die bei ECL-Schaltungen üblichen Emitterausgänge durch die niederohmige Absenkung des NOR-Gattereingangspotentials kurzgeschlossen würden. Das niederohmige Absenken ist aber erforderlich, um die Ansteuerung aus dem Emittern der D-Flipflops unwirksam werden zu lassen. Es wird sinnvoll verwirklicht durch npn-Transistoren, die durch basisseitige Steuerimpulse aus dem Sperrzustand in die Sättigung gebracht werden. Um im Sperrfall (normaler Betriebszustand) dieser Transistoren

aus den Flipflopemittern genügend Strom zu ziehen, sind die Widerstände R3 und R4 vorhanden. Für die Dimensionierung der Widerstände gilt: R1 < R3 bzw. R2 < R4, um das betriebsmässige Signal möglichst wenig zu dämpfen. Die Widerstände R1 bzw. R2 sind möglichst klein, aber mindestens so hoch zu wählen, dass der maximal zulässige Emitterstrom nicht überschritten wird. Die Widerstände R3 bzw. R4 sind möglichst hoch, jedoch so klein zu wählen, dass der minimal notwendige Emitterstrom erreicht wird.

Durch die Ankopplung der Eingänge der Wechselspannungsdetektoren an die den D-Flipflops abgewandte Seite der Widerstände R1 und R2 werden letztere durch die Wechselspannungsdetektoren mitüberwacht. Das Anlegen des «Low»-Pegels an den ersten NOR-Gattereingang erfolgt mittels des npn-Transistors T1, dessen Kollektoranschluss in die Verbindung zwischen Strombegrenzungswiderstand R1 und Eingang des ersten NOR-Gatters geschaltet ist.

Analog wird der «Low»-Pegel am Eingang des zweiten NOR-Gatters NOR2 mittels des npn-Transistors T2 erzeugt. Fallen die Kollektorwiderstände dieser beiden Transistoren oder aber die Transistoren selbst durch Unterbrechung aus, so wird dies dadurch erkannt, dass bei der Prüfung trotz angelegter Fehlerpegel keine Fehlermeldung am Ausgang F erscheint. Bei Ausfall durch Kurzschluss kommt es dagegen ständig zur Fehlermeldung.

In die Verbindung zwischen Fehlerausgang F und Telemetrieeinrichtung, die die Fehlermeldung zu einer auswertenden Endstelle überträgt, kann zusätzlich ein Fehlerzähler eingeschaltet sein, der dann mit überwacht werden muss. Dazu sind die bereits beschriebenen Prüfungen geeignet, bei denen eine Fehlermeldung am Fehlerausgang F auftreten muss. In diesem Fall muss auch der Fehlerzähler an die nachgeschaltete Telemetrieeinrichtung eine Information abgeben, die seinem Zählerstand entspricht. Die praktische Prüfung geschieht dabei beispielsweise dadurch, dass zu Beginn oder am Ende eines jeden Fehlermeldezyklus die Auswerteschaltung des jeweiligen Regenerators mittels einer Synchroneinrichtung einige Mikrosekunden lange Torimpulse erzeugt, so dass der Fehlerzähler bis zu seinem Endwert durchgeschaltet wird. Zu diesem Zweck enthält die Auswerteschaltung eine zusätzliche Abfrageeinrichtung für den Fehlerzähler. Wird der maximale Fehlerstand an diese Abfrageeinrichtung abgegeben, dann werden, durch die Auswerteschaltung ASW gesteuert, der Fehlerzähler rückgesetzt und die Torimpulse AB für die Eingänge der Transistoren T1 bzw. T2 gelöscht. Stellt die Abfrageeinrichtung der Auswerteschaltung jedoch keinen maximalen Zählerstand fest, so wird an die Telemetrieeinrichtung eine spezielle Meldung abgegeben, die eine defekte Überwachung signalisiert.

Bei einem weiteren, nicht dargestellten Ausführungsbeispiel enthält die Auswerteschaltung einen asynchronen, also freilaufenden Prüfgenerator, durch den die Prüf-Torimpulse in beliebigen Zeitabständen erzeugt werden können und die Ergebnisse der Prüfung mit einer beliebigen Fehlermeldung zur Telemetrieeinrichtung kombiniert übertragen werden. Die Auswerteschaltung enthält ausserdem wahlweise einen Steuereingang, der mit der Telemetrieeinrichtung verbunden ist und dadurch den Start der Prüfung von einer Auswertungsstelle aus ermöglicht.

Die Auswerteeinrichtung enthält in einem weiteren Ausführungsbeispiel einen Prüfgenerator für Prüfimpulse entsprechend den Impulsen des Übertragungssignals. Die Ausgänge dieses Prüfgenerators sind dabei mit entsprechenden Ausgängen der D-Flipflops verbunden. Die Prüfimpulse werden nun in solchen Zeitschlitzen eingesetzt, in denen der Entscheider, falls er nur einen Ausgang hat, keinen Impuls der entgegengesetzten Polarität abgibt. Entsprechend sind für Entscheider mit zwei Ausgängen die Ausgänge des Prüfgenerators so gesteuert, dass nur dann ein Impuls abgegeben wird, wenn der ihm nicht zugeordnete Entscheiderausgang keinen AMI-Impuls erkennt. Nur in diesem Falle ist nämlich sichergestellt, dass die Prüfimpulse vom Regenerator eliminiert werden und während des laufenden Betriebs keinen Übertragungsfehler verursachen.

Mit der beschriebenen Einrichtung ist auch eine Prüfung bei ausser Betrieb gesetztem Übertragungssystem möglich. Das Ausserbetriebsetzen erfolgt dabei lediglich durch Abtrennen der Signalquelle im sendeseitigen Leitungsendgerät der Übertragungsstrecke. Dadurch wird von der bereits erwähnten, an die Sendestufen der einzelnen Regeneratoren angeschlossenen Überwachungseinrichtungen ein Signal entsprechend dem Fehlerfall «kein Ausgangssignal» abgegeben. Dieses Signal kann zum Starten eines Prüfgenerators verwendet werden, der abwechselnd Folgen positiver und negativer Impulse abgibt, wobei die Impulse in der Amplitude den Entscheiderausgangsimpulsen und in der Impulsdauer wenigstens den Entscheiderausgangsimpulsen entsprechen. Für die zeitliche Aufeinanderfolge der Prüfimpulse besteht dabei keine exakte Vorschrift, sofern der Coderegelüberwachungsprüfer asynchron arbeitet und nur statische Speicher enthält. Die Prüfimpulse können dann auch mittels eines vergleichsweise einfachen Prüfgenerators, also beispielsweise eines Relaxationsoszillators oder eines astabilen Multivibrators, erzeugt werden. Das bei dieser Messung weiterhin in Betrieb bleibende Telemetriesystem zur Fehlermeldung an die Endststelle meldet dann von allen Regeneratoren mit intaktem Coderegel-Verletzungsprüfer die für diesen Fall vorgesehene Information, ausgelöst durch die künstlichen Coderegel-Verletzungen. Die Prüfung kann dabei auch so erfolgen, dass zunächst durch das Fehlersignal der Überwachungseinrichtung der Endstufe, dass kein Übertragungssignal vorliegt, in den Regeneratoren zusätzliche Flipflops gesetzt werden, die beim nachfolgenden Beaufschlagen des Leitungsendgerätes mit dem Übertragungssignal die Torimpulse erzeugen und so die Prüfung einleiten.

Im Zusammenhang mit der Erläuterung der Funktion der Anordnung nach der Fig. 1 sei ausserdem darauf verwiesen, dass die gesamte Regeneratoranordnung weitere, in der Fig. 1 nicht gezeigte Überwachungseinrichtungen enthält. So ist beispielsweise an die Regeneratorendstufe eine Überwachungseinrichtung angeschlossen, durch die der Übertragungsweg für das digitale Signal überwacht wird. Durch diese Überwachungseinrichtung wird bereits ein Teil des Coderegel-Verletzungsprüfers, nämlich das im Übertragungsweg des digitalen Signals liegende RS-Flipflop, in die Regeneratorüberwachung einbezogen. Wurden beide Ausgänge des RSFF zur Gegentaktansteuerung der Endstufe herangezogen, und zwar in der Form, dass diese kein Signal abgeben kann, wenn einer der Flipflopausgänge ausfällt, dann ist die Überwachung des Flipflops von der Endstufe her vollständig. In diesem Fall wird der an den invertierenden Ausgang $\bar{Q}$ des RS-Flipflops anzuschliessende Detektor überflüssig.

Bei einer Eintakt-Ansteuerung der Endstufe wird jedoch nur der nichtinvertierende Ausgang des RS-Flipflops von der Endstufe her überwacht, so dass der an den invertierenden Ausgang des RS-Flipflops anzuschliessende Detektor zunächst erforderlich ist.

Ist das Ausgangssignal des RS-Flipflops nicht mehr mit dem Eingangssignal korreliert, z.B. durch Schwingungen, dann wird bereits von der an die Endstufe angeschlossenen Überwachungseinrichtung eine Meldung an einen zentralen Fehlerausgang abgegeben. Eine zusätzliche Überwachung ist deshalb für die beiden nicht an das RS-Flipflop angeschlossenen Ausgänge der beiden D-Flipflops sowie für die beiden NOR-Gatter gegebenenfalls für den invertierenden Ausgang $\bar{Q}$ des RS-Flipflops und für einen Fehlerzähler nötig.

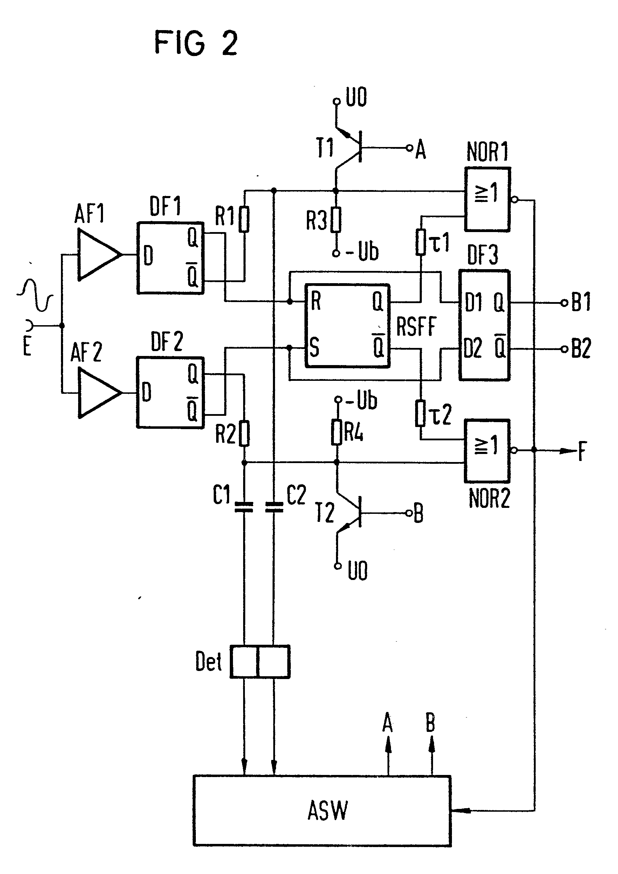

Der in Fig. 2 dargestellte Teil eines Regenerators entspricht weitgehend dem Regenerator nach der Fig. 1, im Hinblick auf die Verwendung in einem Endregenerator wurde jedoch ein drittes D-Flipflop DF3 mit zwei Eingängen D1 und D2 und den beiden Ausgängen B1 und B2 eingefügt. Die in der beschriebenen Art und Weise durch die Amplitudenfilter und das erste und das zweite D-Flipflop amplituden- und zeitmässig regenerierten Signale werden im dritten D-Flipflop umcodiert. Die beiden D-Eingänge dieses D-Flipflops sind dabei durch die ODER-Funktion miteinander verknüpft. Zusätzlich ist bei der Anordnung nach der Fig. 2 der Überwachungsaufwand dadurch verringert worden, dass der dritte Detektor der Detektoranordnung Det und der zugehörige Koppelkondensator C3 weggelassen worden sind. Der Kondensator C3 war an den invertierenden Ausgang $\bar{Q}$ des RS-Flipflops angeschlossen, um diesen Ausgang mitüberwachen zu können. Es hat sich nun gezeigt, dass auf diese Überwachungsmöglichkeit verzichtet werden kann, wenn die Prüfsignale an den Anschlüssen A und B zeitlich nacheinander anliegen. Durch ein Signal am Anschluss B allein wird der invertierende Ausgang $\bar{Q}$ des RS-Flipflops und durch ein Signal am Anschluss A allein der entsprechende nichtinvertierende Ausgang Q überwacht.

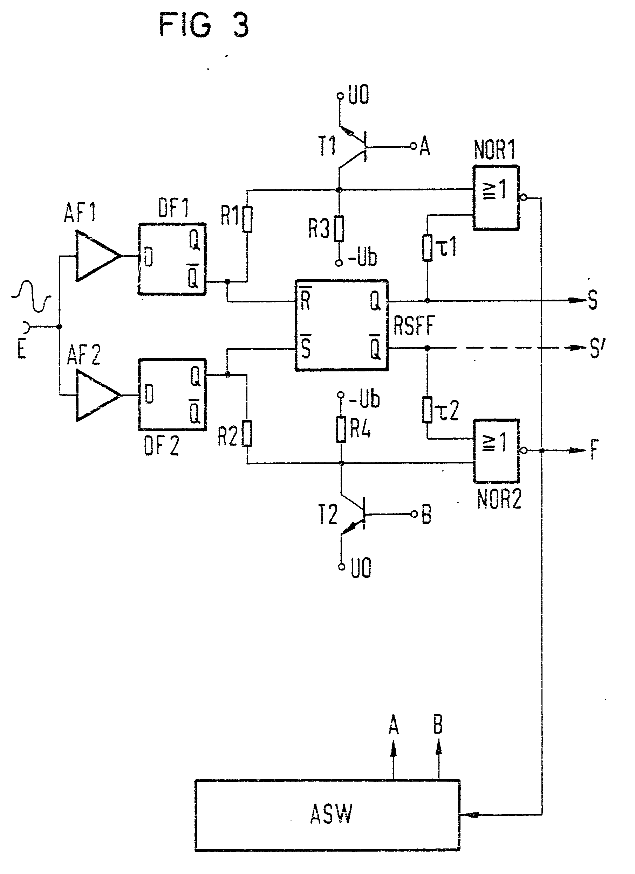

Der Regenerator entsprechend der Fig. 3 ist gegenüber den vorstehend geschilderten Regeneratoren durch Wegfall der Detektoranordnungen weiter vereinfacht. Dies wurde dadurch ermöglicht, dass der invertierende Rücksetzeingang $\bar{R}$ und der invertierende Setzeingang $\bar{S}$ des RS-Flipflops anstelle der nichtinvertierenden Eingänge verwendet werden und diese Eingänge mit demjenigen Ausgang der vorgeschalteten D-Flipflops DF1 bzw. DF2 verbunden sind, an die auch die NOR-Gatteranordnungen NOR1 bzw. NOR2 angeschlossen sind. Eine Überwachung der nicht beschalteten Ausgänge der D-Flipflops ist überflüssig. Die Steuerung der Auswerteschaltung ASW erfolgt dann nur über den Fehlerausgang F der Überwachungseinrichtung, das in der Auswerteschaltung enthaltene Programm und gegebenenfalls durch eine externe Steuerung.

## Patentansprüche

1. Anordnung zur Überwachung eines einen Coderegel-Verletzungsprüfer mit angeschlossenem Fehlerzähler enthaltenden Regenerators für im AMI-Code vorliegende PCM-Signale, der an wenigstens zwei inneren Anschlüssen zwei amplituden- und zeitmässig regenerierte unipolare Impulszüge erzeugt, von denen jeweils einer die positiven und einer die negativen Eingangsimpulse repräsentiert, wobei zur Coderegel-Verletzungsprüfung zusätzlich ein RS-Flipflop (RSFF) vorgesehen ist, dessen Rücksetzeingang (R) und dessen Setzeingang (S) jeweils getrennt mit jeweils einem Ausgang der getakteten D-Flipflops (DF1, DF2) verbunden sind und die Ausgänge des RS-Flipflops den Gegentaktsignalausgang (SA) für das regenierte Signal darstellen, so dass an jedem Ausgangsanschluss ein unipolarer, die gesamte Information enthaltender Impulszug entnehmbar ist, wobei zwei Gatteranordnungen mit jeweils zwei Eingängen vorgesehen sind und der eine Eingang der ersten Gatteranordnung mit dem nichtinvertierenden Ausgang (Q) des RS-Flipflops (RSFF) verbunden ist und der andere Eingang der ersten Gatteranordnung mit dem Ausgang desjenigen getakteten D-Flipflops verbunden ist, an das der Rücksetzeingang (R) des RS-Flipflops (RSFF) angeschlossen ist, wobei weiters der eine Eingang der zweiten Gatteranordnung mit dem invertierenden Ausgang ($\bar{Q}$) des RS-Flipflops (RSFF) verbunden ist und der andere Eingang der zweiten Gatteranordnung mit einem Ausgang desjenigen getakteten D-Flipflops verbunden ist, an das der Setzeingang (S) des RS-Flipflops (RSFF) angeschlossen ist und wobei die Ausgänge der Gatteranordnungen miteinander und mit einem Ausgang (F) für ein Fehlersignal verbunden sind, und eine Erzeugung von Prüffolgen im laufenden Betrieb dadurch erfolgt, dass an jeweils einem der Ausgänge der D-Flipflops (DF1, DF2) Spannungsdetektoren (Det) angeschlossen sind, deren Ausgangsanschlüsse mit den Eingängen einer Auswerteschaltung (ASW) verbunden sind und wobei dabei die Steuerausgänge dieser Auswerteschaltung mit dem Basisanschluss jeweils eines von zwei Schalttransistoren (T1, T2) verbunden sind, deren Ermitteranschlüsse jeweils mit Bezugspotential ($U_o$), deren Kollektoranschlüsse über je einen Schutzwiderstand (R1, R2) mit einem der Ausgänge des zugeordneten D-Flipflops, einem der Eingänge der zugeordneten Gatteranordnung und über einen weiteren Widerstand (R3, R4) mit Betriebsspannung ($-U_b$) verbunden sind und dabei entsprechend der Polarität des angeschlossenen Ausgangs des D-Flipflops in beiden Fällen ein npn-Transistor (T1 bzw. T2) vorgesehen ist.

2. Anordnung nach Patentanspruch 1, dadurch gekennzeichnet, dass der Wert der an die Ausgänge der D-Flipflops angeschlossenen Schutzwiderstände (R1, R2) kleiner als der Wert der an die Betriebsspannung angeschlossenen weiteren Widerstände (R3, R4) ist und dass dabei der Wert der Schutzwiderstände (R1, R2) möglichst klein aber mindestens so hoch ist, dass der maximal zulässige Strom der Ausgänge der beiden D-Flipflops nicht überschritten wird und dass die Werte der weiteren Widerstände (R3, R4) möglichst hoch, jedoch so klein sind, dass der zum Betrieb wenigstens erforderliche Strom aus den Ausgängen der D-Flipflops erreicht wird.

3. Anordnung nach Patentanspruch 1, dadurch gekennzeichnet, dass mit dem invertierenden Ausgang ($\bar{Q}$) des RS-Flipflops ein weiterer Spannungsdetektor verbunden ist.

4. Anordnung nach Patentansprüchen 1 oder 3, dadurch gekennzeichnet, dass als Spannungsdetektoren Wechselspannungsdetektoren vorgesehen sind, die über eine lose kapazitive Kopplung an die Ausgänge der Flipflops angeschlossen sind.

5. Anordnung nach Patentansprüchen 1 oder 3, dadurch gekennzeichnet, dass als Spannungsdetektoren Gleichspannungsdetektoren vorgesehen sind, die ein Integrationsglied hoher Zeitkonstante mit nachgeschaltetem Schwellwertschalter enthalten und die an die Ausgänge der Flipflops hochohmig angekoppelt sind.

6. Anordnung nach Patentansprüchen 1 bis 5, dadurch gekennzeichnet, dass der invertierende Rücksetzeingang ($\bar{R}$) des RS-Flipflops mit dem invertierenden Ausgang ($\bar{Q}$) des einen D-Flipflops verbunden ist, dass der inverse Setzeingang ($\bar{S}$) des RS-Flipflops mit dem nichtinvertierenden Ausgang (Q) des anderen D-Flipflops (DF2) verbunden ist, dass der invertierende Rücksetzeingang ($\bar{R}$) des RS-Flipflops über den ersten Widerstand (R1) mit dem Kollektoranschluss des ersten Transistors (Ta) und mit dem einen Eingang des ersten NOR-Gatters (NOR1) verbunden ist, dass der inverse Setzeingang ($\bar{S}$) des RS-Flipflops über den zweiten Widerstand (R2) mit dem Kollektoranschluss des zweiten Transistors (T2) und mit dem einen Eingang des zweiten NOR-Gatters (NOR2) verbunden ist und dass die Spannungsdetektoren mit ihren Koppelelementen entfallen.

**Revendications**

1. Dispositif pour la surveillance d'un régénérateur comportant un vérificateur de violation de la loi de codage auquel est raccordé un compteur de défauts, pour des signaux PCM se présentant dans le code AMI, qui produit sur au moins deux bornes internes deux trains d'impulsions unipolaires régénérés en amplitude et en temps, parmi lesquels un représente les impulsions d'entrée positives et un les impulsions d'entrée négatives, cependant que pour la vérification de violation de la loi de codage il est prévu une bascule de type RS (RSFF) dont l'entrée de mise dans l'état de repos (R) et l'entrée de mise dans l'état excité (S) sont respectivement reliées de façon distincte à une sortie respective des bascules de type D (DF1, DF2) synchronisées, et les sorties de la bascule de type RS représentent la sortie de signaux symétrique (SA) pour le signal régénéré, de sorte que sur chaque borne de sortie peut être prélevé un train d'impulsions unipolaire contenant l'information globale, cependant qu'il est prévu deux circuits de porte comportant respectivement deux entrées et une des entrées du premier circuit de porte est reliée à la sortie non inverseuse (Q) de la bascule de type RS (RSFF) et l'autre entrée du premier circuit de porte est reliée à une sortie de celle des bascules de type D synchronisées à laquelle est reliée l'entrée de mise dans l'état de repos (R) de la bascule de type RS (RSFF), cependant qu'en outre une des entrées du second circuit de porte est reliée à la sortie inverseuse ($\bar{Q}$) de la bascule de type RS (RSFF) et l'autre entrée du second circuit de porte est reliée à une sortie de celle des bascules de type D synchronisées à laquelle est reliée l'entrée de mise dans l'état excité (S) de la bascule de type RS (RSFF), et cependant que les sorties des circuits de porte sont reliées entre elles et à une sortie (F) pour un signal de défaut, et cependant qu'une production de séquences de contrôle en service permanent a lieu grâce au fait qu'à une des sorties respectives des bascules de type D (DF1, DF2) sont raccordés des détecteurs de tension (Det) dont les bornes de sortie sont reliées aux entrées d'un circuit d'évaluation (ASW), et cependant que ce faisant les sorties de commande de ce circuit d'évaluation sont reliées à la borne de base respectivement d'un de deux transistors de commutation (T1, T2) dont les bornes d'émetteur sont respectivement reliées au potentiel de référence ($U_o$), dont les bornes de collecteur sont reliées, par l'intermédiaire d'une résistance de protection respective (R1, R2), à une des sorties de la bascule de type D associée, à une des entrées du circuit de porte associé et, par l'intermédiaire d'une autre résistance (R3, R4), à la tension de fonctionnement ($-U_b$), et ce faisant un transistor npn (T1 ou T2) est prévu dans les deux cas, en correspondance avec la polarité de la sortie raccordée de la bascule de type D.

2. Dispositif suivant la revendication 1, caractérisé par le fait que la valeur des résistances de protection (R1, R2) raccordées aux sorties des bascules de type D est plus faible que la valeur des autres résistances (R3, R4) raccordées à la tension de fonctionnement, et que ce faisant la valeur des résistances de proctection (R1, R2) est aussi faible que possible mais au moins suffisamment importante pour que le courant admissible au maximum des sorties des deux bascules de type D ne soit pas dépassé, et que les valeurs des autres résistances (R3, R4) sont aussi importantes que possible mais suffisamment faibles pour que le courant, au moins nécessaire pour le fonctionnement, provenant des sorties des bascules de type D soit atteint.

3. Dispositif suivant la revendication 1, caractérisé par le fait qu'un autre détecteur de tension est relié à la sortie inverseuse ($\overline{Q}$) des bascules de type RS.

4. Dispositif suivant les revendications 1 ou 3, caractérisé par le fait qu'il est prévu, en tant que détecteurs de tension, des détecteurs de tension alternative qui sont raccordés aux sorties des bascules par l'intermédiaire d'un faible couplage capacitif.

5. Dispositif suivant les revendications 1 ou 3, caractérisé par le fait qu'il est prévu, en tant que détecteurs de tension, des détecteurs de tension continue qui contiennent un élément intégrateur présentant une constante de temps importante avec un commutateur à seuil monté en aval, et qui sont couplés de façon fortement ohmique aux sorties des bascules.

6. Dispositiv suivant les revendications 1 à 5, caractérisé par le fait que l'entrée inverseuse de mise dans l'état de repos ($\overline{R}$) de la bascule de type RS est reliée à l'entrée inverseuse ($\overline{Q}$) d'une des bascules de type D, que l'entrée inverseuse de mise dans l'état excité ($\overline{S}$) de la bascule de type RS est reliée à l'entrée non inverseuse (Q) de l'autre bascule de type D (DF2), que l'entrée inverseuse de mise dans l'état de repos ($\overline{R}$) de la bascule de type RS est reliée, par l'intermédiaire de la première résistance (R1), à la borne de collecteur du premier transistor (T1) et à une des entrées de la première porte $\overline{OU}$ (NOR1), que l'entrée inverseuse de mise dans l'état excité ($\overline{S}$) de la bascule de type RS est reliée, par l'intermédiaire de la seconde résistance (R2), à la borne de collecteur du second transistor (T2) et à une des entrées de la seconde porte $\overline{OU}$ (NOR2), et que les détecteurs de tension avec leurs éléments de couplage sont supprimés.

**Claims**

1. Arrangement for monitoring a regenerator which includes a code rule infringement checking device connected to an error counter, for PCM signals occurring in AMI code, which regenerator generates, at a minimum of two inner terminals, two unipolar pulse trains which are regenerated in terms of amplitude and time and of which one represents the positive and one the negative input pulses, wherein, for the code rule infringement checking there is additionally provided an RS flipflop (RSFF) whose reset input (R) and whose set input (S) are respectively separately connected to an output of the pulsed D flip-flop (DF1, DF2), and the outputs of the RS flip-flop produce the push-pull signal output (SA) for the regenerated signal so that a unipolar pulse train which contains the total information can be obtained from each output terminal, where two gate arrangements are provided each of which has two inputs, and the first input of the first gate arrangement is connected to the non-inverting output (Q) of the RS flip-flop (RSFF) and the other input of the first gate arrangement is connected to an output of the particular pulsed D flip-flop which is connected to the reset input (R) of the RS flip-flop (RSFF), where furthermore the first input of the second gate arrangement is connected to the inverting output ($\overline{Q}$) of the RS flip-flop (RSFF) and the other input of the second gate arrangement is connected to an output of the particular pulsed D flip-flop which is connected to the set input (S) of the RS flip-flop (RSFF), and where the outputs of the gate arrangements are connected to one another and to an output (F) for an error signal, and where the generation of checking sequences in the course of operation is effected in that respective ones of the outputs of the D flipflops (DF1, DF2) are connected to voltage detectors (Det) whose output terminals are connected to the inputs of an analysis circuit (ASW), and where the control outputs of this analysis circuit are respectively connected to the base terminal of one of two switching transistors (T1, T2) whose emitter terminals are each connected to reference potential ($U_o$), whose collector terminals are each connected via a protective resistor (R1, R2) to one of the outputs of the assigned D flip-flops, to one of the inputs of the assigned gate arrangement, and via a further resistor (R3, R4) to operating valtage ($-U_b$) and, in accordance with the polarity of the connected output of the D flipflop, in both cases an npn-transistor (T1, T2) is provided.

2. Arrangement as claimed in patent claim 1, characterised in that the value of the protective resistors (R1, R2) which are connected to the outputs of the D flip-flops is smaller than the value of the further resistors (R3, R4) which are connected to the operating voltage, and that the value of the protective resistors (R1, R2) is as small as possible but at least such that the maximum permissible current of the outputs of the two D flip-flops is not exceeded, and that the values of the further resistors (R3, R4) are as high as possible but sufficiently low that the current at least necessary for operation is obtained from the outputs of the D flip-flops.

3. Arrangement as claimed in patent claim 1, characterised in that a further voltage detector is connected to the inverting output ($\overline{Q}$) of the RS flip-flop.

4. Arrangement as claimed in patent claims 1 or 3, characterised in that as the voltage detectors there are provided a.c. voltage detectors which are connected via a weak capacitive coupling to the outputs of the flip-flops.

5. Arrangement as claimed in patent claims 1 or 3 characterised in that as the voltage detectors there are provided d.c. voltage detectors which include an integration element having a high time constant followed by a threshold value switch, and which are coupled in highly ohmic fashion to the outputs of the flip-flops.

6. Arrangement as claimed in patent claims 1 to 5 characterised in that the inverting reset input (R̄) of the RS flip-flop is connected to the inverting output (Q̄) of the first D flip-flop, that the inverse set input (S̄) of the RS flip-flop is connected to the non-inverting output (Q) of the other D flip-flop (DF2), that the inverting reset input (R̄) of the RS flip-flop is connected via the first resistor (R1) to the collector terminal of the first transistor (T1) and to the first input of the first NOR gate (NOR1), that the inverse set input (S̄) of the RS flip-flop is connected via the second transistor (R2) to the collector terminal of the second transistor (T2) and to the first input of the second NOR gate (NOR2), and that the voltage detectors, together with their coupling elements, are dispensed with.

# FIG 1

FIG 2

# FIG 3